# EUROPÄISCHE PATENTSCHRIFT

(11) **EP 3 935 288 B1**
(45) Veröffentlichungstag und Bekanntmachung des Hinweises auf die Patenterteilung: **21.01.2026**
(21) Anmeldenummer: 21705427.9
(22) Anmeldetag: 02.02.2021
(51) Int. Cl.: F16D 51/22

(54) **BREMSVORRICHTUNG**
BRAKE DEVICE
DISPOSITIF DE FREIN

(30) Priorität: 04.03.2020 DE 102020105874
(43) Veröffentlichungstag der Anmeldung: 12.01.2022
(73) Patentinhaber: Birmanns, Thomas, 72336 Balingen (DE)
(72) Erfinder: Birmanns, Thomas, 72336 Balingen (DE)
(74) Vertreter: Christ, Niko
(86) Internationale Anmeldenummer: PCT/DE2021/100098
(87) Internationale Veröffentlichungsnummer: WO 2021/175359

(56) Entgegenhaltungen:
- DE-A1- 102010 014 862
- GB-A- 214 564
- US-A- 2 002 785
- US-B2- 8 408 367

## Beschreibung

Die Erfindung betrifft eine Bremsvorrichtung umfassend eine Bremseinheit und ein mit dieser in Eingriff bringbares, relativ zu der Bremseinheit bewegliches Kontaktelement, wobei die Bremseinheit wenigstens ein Aktivierungselement und wenigstens ein Bremselement umfasst und das Aktivierungselement zum Verschieben des Bremselements in Richtung des Kontaktelements bis zu einer Kontaktierung desselben durch den Bremsschuh an dem Übertragungselement angreift, wobei das Bremselement ein Schwenklager mit dem Übertragungselement aufweist, welches in Richtung des Kontaktelements verschieblich ist.

Eine solche Bremsvorrichtung ist bereits aus der US 2,002,785 A1 vorbekannt. Die dort gezeigte Vorrichtung sieht mehrere konzentrische Ringe vor, von denen zwei miteinander über ein Aktivierungselement verbunden sind, so dass im Fall einer Aktivierung Bremsschuhe mit einem Schwenklager ausgerückt werden. Diese drücken mit ihren Flächen gegen die Innenseite einer Bremstrommel, so dass eine Bremswirkung auftritt. Hierbei erhöht sich die Bremswirkung lediglich entsprechend der auf das Aktivierungselement wirkenden Kraft.

Weiter ist auf die DE 10 2010 014 862 A1, die GB 214 564 A und die US 8,408,367 B2 zu verweisen.

Aus dem Stand der Technik sind weitere Bremsvorrichtungen unter anderem aus der deutschen Patentanmeldung DE 10 2018 111 567 A1 vorbekannt, welche eine Antriebsanordnung für ein Rad eines Rollstuhls oder dergleichen mit einem elektrischen Antrieb und einer Bremsanordnung offenbart. Die Bremsanordnung umfasst hierbei ein feststehendes inneres Bremsenteil und ein mit dem Rad rotierbares äußeres Bremsenteil, wobei die Bremsenteile axial oder radial relativ zueinander bewegbar sind und eines der Bremsenteile bei geschlossener Bremse mittelbar oder unmittelbar federbeaufschlagt gegen das andere Bremsenteil drückt. Auch sind bei geöffneter Bremse die Bremsenteile mittelbar oder unmittelbar durch ein Halteelement voneinander beabstandet gehalten. Die hier beschriebene Bremsvorrichtung zeigt eine Bremse, deren innere Bremsenteile mittels eines Übertragungsmechanismus bei geöffneter Bremse radial nach innen eingezogen sind. Bei Aktivierung des Mechanismus werden die inneren Bremsenteile radial nach außen gedrückt, so dass diese in Eingriff mit dem äußeren Bremsenteil gelangen und eine Bremsung stattfindet. Mittels dieser Bremsvorrichtung kann eine Feststellbremse realisiert werden. Allerdings sind die inneren Bremsenteile die in die äußeren Bremsenteile greifen, starr ausgebildet, so dass bei einer Notfallbremsung mit der hier beschriebenen Bremsvorrichtung eine sichere Verriegelung nicht zuverlässig gewährleistet ist.

Zahnbremsen oder auch Zahnkupplungen stellen ein effizientes, schaltbares Mittel zum Halten oder Bremsen einer Last bei geringen Geschwindigkeiten dar, in der Regel bis zu 20 U/min, siehe Thomsonlinear.com, TC/TCR/TCP Zahnkupplungen und -bremsen.

Bei höheren Geschwindigkeiten ist eine sichere Verriegelung nicht mehr zuverlässig gewährleistet, da die Zahnköpfe beim Ineinandergreifen touchieren und Verriegelung nicht mehr zuverlässig erfolgt. Aus diesem Grund finden Zahnkupplungen und -bremsen fast ausschließlich für das Schalten, bzw. Bremsen im Stillstand oder annäherndem Gleichlauf Anwendung.

Das Ausrücken ist auch unter Volllast und bei voller Drehzahl möglich. Dies jedoch nur unter erhöhtem Kraftaufwand, da die Reibkräfte der Zahnflanken zueinander unter Last entsprechend hoch sind.

Zum Einsatz können derartige Kupplungs- oder Bremsvorrichtungen in den bekannten Anwendungsgebieten, wie Druck-, Verpackungsmaschinen, Dynometern, Werkzeugmaschinen und Textilmaschinen kommen. Darüber hinaus in weiteren Gebieten, als Wegrollsperren bei Kraftfahrzeugen, Aufzugantrieben und dergleichen mehr.

Besonders geeignet erscheint eine solche Kupplungs- oder Bremsvorrichtung für den Einsatz bei Rollstühlen für behinderte Personen.

Die meisten Rollstuhlantriebe beschleunigen und bremsen, bevorzugtermaßen bis zum Stillstand, den Rollstuhl mittels eines Gleichstrommotors. Zudem weisen die meisten Rollstuhlantriebe eine Sicherheitsbremse auf. Diese Sicherheitsbremse dient dazu, den Rollstuhl jederzeit bei Bedarf in den sicheren Stand zu bringen und im sicheren Stand zu halten. Für gewöhnlich greift diese Bremse erst, sobald sich das Fahrzeug bereits im Stillstand befindet, also wenn der Fahrbefehl durch den Benutzer auf "0" gesetzt ist oder wenn das Fahrzeug ausgeschaltet ist. In diesem Fall wirkt die Bremse wie eine Feststellbremse. Ein Sonderfall tritt jedoch dann auf, wenn ein Notfall vorliegt, d.h. der Motor bremst das Fahrzeug nicht zum Stillstand. Das kann der Fall sein, wenn ein Fehler oder eine Stromunterbrechung vorliegt. Hier muss die Bremse automatisch einfallen und das Fahrzeug sicher zum Stillstand bringen. Fährt ein Rollstuhlfahrer beispielsweise bergab und es kommt zu einem Störfall, so muss der Rollstuhl in einer vorgegebenen Strecke sicher zum Stillstand kommen. Ist eine Weiterfahrt für den Rollstuhlfahrer danach nicht mehr möglich, so muss die Bremse mit geringen Kräften gelüftet werden können, um einen manuellen Vortrieb des Rollstuhls zu ermöglichen.

Sicherheitsbremsen sind daher typischerweise federvorgespannte Reibbremsen, sogenannte Federdruckbremsen, die mittels eines Elektromagneten geöffnet werden. Im stromlosen Fall ist die Bremse geschlossen. Bremsvorrichtungen für Nabenantriebe, beziehungsweise für motorisiert angetriebene Rollstühle, sind aus der EP 0 528 235 B1, sowie der EP 0 699 550 A2 vorbekannt.

Aus der DE 198 57 786 C2 ist eine Sonderform eines Rollstuhlantriebs vorbekannt, der keiner Bremseinrichtung bedarf.

Aus der EP 0 699 550 A2 ist eine Nabenantriebsvorrichtung für angetriebene Räder eines Kleinfahrzeuges, insbesondere eines Rollstuhls, offenbart. Die Vorrichtung umfasst einen Gleichstrommotor, der als Außenläufermotor ausgebildet ist, wobei dessen Außenläufer die Radnabe oder die Felge des Laufrades bildet. Der Stator des Gleichstrommotors ist über ein Bremsgehäuse feststehend mit dem Kleinfahrzeug verbunden. Weiterhin verfügt diese Vorrichtung über eine zentrale elektromagnetisch und manuell lüftbare bzw. lösbare Federdruckbremse, welche bei Stromausfall die Nabenantriebsvorrichtung abbremst. Das manuelle Lüften der Bremse dient gleichzeitig als "auskuppeln" in den Freilauf, um den manuellen Vortrieb des Rollstuhls zu ermöglichen.

Da die Bremse als Reibbremse ausgeführt ist, muss diese beim Bremsvorgang dasselbe Moment aufbringen, welches der Motor beim Antrieb leistet. Damit die dafür erforderlichen, hohen Anpresskräfte realisiert werden können, wird ein, bei einer elektromagnetischen Bremse entsprechend großer und somit schwerer Elektromagnet benötigt. Entsprechende Antriebe für Rollstühle finden nur geringe Verwendung, da die Bauform schwer und teuer ist.

Die EP 0 528 235 B1 offenbart eine Nabenantriebsvorrichtung, umfassend einen Gleichstrommotor mit einem Läufer, ein Planetenradgetriebe, eine ausschließlich elektromagnetisch lüftbare auf den Läufer wirkende Federbremse, sowie eine Kupplung, wobei die Vorrichtung als Antriebsteil eines großen Laufrads eines Rollstuhls ausgebildet ist. Das von dem Läufer des Gleichstrommotors gelieferte Drehmoment wird über das Planetengetriebe auf den kugelgelagerten Planetenradträger und von dort aus über eine Kupplung auf den Nabenkörper übertragen. Die Kupplung kann manuell entriegelt werden, so dass ein Freilauf des Rollstuhls ermöglicht wird. Somit kann der Rollstuhl auch manuell angetrieben werden, beispielweise über die Greifreifen oder mittels Schieben. Der Vorteil dieser Nabenantriebsvorrichtung liegt darin, dass die erforderliche Bremse klein gehalten werden kann, da das Bremsmoment über das Planetengetriebe verstärkt wird.

Dieser Aufbau ist kleiner und leichter als der aus der EP 0 699 550 A2, jedoch wesentlich komplexer und störanfälliger.

Ein weiterer Nachteil der Konstruktion ist, dass die formschlüssige Kupplung der Nabenantriebsvorrichtung nicht in jeder Position einrastet und sich unter Last nur sehr schwer entriegeln lässt. Dies ist beispielsweise dann der Fall, wenn der Rollstuhl an einer Steigung, insbesondere an einem Hügel, einem Berg oder einer Rampe steht.

Auch das deutsche Patent DE 198 57 786 C2 offenbart eine Nabenantriebsvorrichtung, allerdings für restkraftunterstützende Antriebe, so dass hier auf eine Bremsvorrichtung gänzlich verzichtet wird. Jedoch stellt dieses einen nicht unerheblichen Sicherheitsnachteil dar, weshalb bei Rollstühlen mit sogenannten Fahrbefehlseingabegeräten, wie beispielsweise solchen, die per Joystick gesteuert werden können, eine Bremse normativ gefordert ist.

Die zuvor beschriebenen Bremsvorrichtungen, die in dem Patent EP 0 528 235 B1 und der Patentanmeldung EP 0 699 550 A2 offenbart sind, sind bauartbedingt Stillstandbremsen. Somit werden diese erst aktiv, wenn der jeweilige Antrieb zum Stillstand kommt. Im allgemeinen Fahrbetrieb wird dieser Zustand durch den Motor bewirkt, da dieser zum Einen beschleunigen und zum Anderen aber auch abbremsen kann. Eine Bremskraftdosierung für solch eine Stillstandbremse, wie sie unter anderem aus einer Fahrradbremse bekannt ist, ist hier nicht erforderlich. Somit ist die Bremse entweder offen oder geschlossen. Weiter ist auf die Schriften DE 90 01 251 U1, WO 2014/ 198 312 A1, DE 10 2010 014 862 A1, DE 521 091 A, GB 214 564 A und DE 10 2018 129 157 A1 hinzuweisen.

Die sich aus dem Stand der Technik ergebenden Probleme sind das sichere Halten, das einfache Lösen unter Last und das Bremsen aus einer Bewegung heraus bei gleichzeitiger Gewährleistung einer kompakten, leichten und günstigen Bauweise.

Ausgehend von dieser Problematik liegt der Erfindung die Aufgabe zugrunde, eine Bremsvorrichtung bereitzustellen, welche sowohl als eine Feststellbremse als auch als eine Notfallbremse funktioniert, die eigentliche Bewegungskraft für die Verzögerung ausnutzt und sich in einer kompakten, leichten und günstigen Bauweise verwirklichen lässt. Gelöst wird diese Aufgabe durch eine Bremsvorrichtung gemäß den Merkmalen des unabhängigen Anspruchs 1. Sinnvolle Weiterbildungen einer solchen Bremsvorrichtung können den sich anschließenden abhängigen Ansprüchen entnommen werden.

Das Ausrückelement erlaubt es dem Bremselement, sich bei einer zunächst nur leichten Kontaktierung des Kontaktelements aufgrund der Querkraft, welche das Kontaktelement mitbringt, auszurücken und damit die auf das Kontaktelement wirkende Bremskraft bis zu dessen Stillstand weiter zu verstärken. Das Übertragungselement ist in Richtung des Kontaktelements durch ein Aktivierungselement verschiebbar, so dass es zunächst in einer Ruheposition gehalten wird und dann in eine Aktivierungsposition verschoben werden kann. Aufgrund des Ausrückelements ist es möglich, bei einem Wegfall der Querkraft die Bremse durch ein Rücksetzen des Übertragungselements wieder zu öffnen, so dass ein Blockieren der Bremse insoweit verunmöglicht ist.

Somit ist vorstehend eine Bremsvorrichtung beschrieben, mit welcher zum einen zuverlässig und mit wenig Energie eine Bremsung ausgelöst werden kann. Es muss keine Energie eingesetzt werden, um das Bremselement gegen das Kontaktelement zu drücken, sondern lediglich um das Bremselement in Eingriff mit dem Kontaktelement auszurücken. Zum anderen kann die Bremse nach Auslösen dieser und nach erfolgter Bremsung in umgekehrter Richtung wiederum mit entsprechend geringem Energieeinsatz zuverlässig gelöst werden.

Ein solches Ausrückelement kann auf unterschiedliche Art und Weise gestaltet sein. So stellt ein über ein Schwenklager aufgehängter Bremsschuh eine erste mögliche Ausgestaltungsform dar, bei der das Ausrücken infolge der Schrägstellung bei einer Verschwenkung erfolgt. Dadurch, dass bei einer Mitnahme des Bremsschuhs durch die Querkraft des Kontaktelements eine Verdrehung des Bremsschuhs um das Schwenklager erfolgt, verlängert sich die Kraftachse durch die Verschwenkung, wenn das Schwenklager seinen Drehpunkt zwischen dem Mittelpunkt eines Außenradius des Bremsschuhs und dessen Außenkante im Bereich des Außenradius besitzt. In diesem Fall nimmt der direkte Abstand zwischen dem Schwenklager und dem Kontaktelement während des Ausrückens zu und es tritt eine Bremswirkung gegenüber dem Kontaktelement ein.

Weiterhin kann der Bremsschuh einen Außenradius aufweisen, der geringer ist als ein Innenradius des Kontaktelements. Dies ermöglicht es, dass bei einer Kontaktierung des Bremsschuhs mit dem Kontaktelement eine Verschwenkung des Bremsschuhs erfolgen kann und der Außenradius des Bremsschuhs auf dem Innenradius des Kontaktelements abrollt. Der Innenradius des Kontaktelements kann hierbei im Übrigen auch gegen Unendlich divergieren, wenn es sich konkret um ein langgestrecktes Kontaktelement handelt.

Beim Ausrücken des Aktivierungselements schiebt dieses das Übertragungselement in Richtung des Kontaktelements bis das Bremselement über den Bremsschuh in das Kontaktelement eingreift. Dabei wird die Bewegungskraft des Kontaktelements bei Kontakt mit dem Bremsschuh durch das Schwenklager auf das Übertragungselement übertragen, so dass die Bremseinheit als Ganzes letztlich die Bewegungskraft aufnimmt. Dabei wird durch die Verdrehung des Bremsschuhs über das Schwenklager mit zunehmender Verdrehung desselben der Hebel des Bremselements verlängert, womit letztlich die Bremswirkung durch eine größere Aufnahme der Bewegungskraft des Kontaktelements erhöht wird. Mit anderen Worten, je stärker der Bremsschuh über das Schwenklager durch das Kontaktelement ausgelenkt wird, umso stärker die auf das Kontaktelement wirkende Bremskraft.

Durch ihren Kontakt mit dem Aktivierungselement stützt sich das Bremselement auf diesem ab und leitet die aufgenommene Bewegungskraft in dieses ab. Hierbei kann das Bremselement bevorzugtermaßen starr gebildet sein, um die Kraft möglichst vollständig ableiten zu können und einen kurzen und effektiven Bremsvorgang zu ermöglichen. Die so eingeleitete Bewegungskraft wirkt schließlich zurück auf das Kontaktelement als Bremskraft. Solange die Bremseinheit in Kontakt mit dem Kontaktelement ist und sich dieses in Bewegung befindet, wird die Kraft des Kontaktelements an das Bremselement und somit an die Bremseinheit übertragen, bis das Kontaktelement zum Stillstand kommt. Somit kann im Falle einer Notfallbremsung ein Vehikel allein aufgrund dessen Bewegung bis zum Stillstand geführt werden.

Wird die zuvor beschriebene Bremsvorrichtung als Feststellbremse genutzt, greift durch die Verdrehung des Aktivierungselements über das Übertragungselement und dem Schwenklager der Bremsschuh des Bremselements zwar in den Eingriff des Kontaktelements ein, baut selbst aber keinen Druck gegen das Kontaktelement auf. Dies geschieht erst infolge der Bewegung des Kontaktelements und des daraus resultierenden Abrollens des Bremsschuhs.

Entsprechend kann das Ausrückelement neben seiner Ausgestaltung als Schwenklager auch eine schiefe Ebene aufweisen, entlang welcher ein Lager des Bremsschuhs auf das Kontaktelement zu verschoben wird. Auch hier wirkt die Querkraft des Kontaktelements, welche durch die Bremse verringert werden soll, zunächst als Mittel zum Ausrücken, bevor die Bremse sich selbst im Zuge des Ausrückens immer weiter zuzieht. Jede andere Bewegungsform, außer dem Verschwenken oder der Bewegung entlang einer Linie, ist denkbar. Auch eine Bewegung entlang jedweder Bahnkurve ist möglich und birgt die Möglichkeit einer Einstellung einer Bremscharakteristik.

Mit einigem Vorteil kann dem Ausrückelement ein Rückstellelement zugeordnet sein, welches das Ausrückelement beim Beenden des Bremsvorgangs, also dem Wegfall einer Querkraft, und/oder beim Rückstellen des Aktivierungselements wieder in seine Aktivierungsposition zurückbringt. Hierdurch kann die Bremse ohne Eingriffe von außen mehrfach ausgelöst werden.

In bevorzugter Ausgestaltung der Erfindung können der Bremsschuh und das Kontaktelement jeweils ein zueinander komplementäres Rastelement aufweisen. Dies erhöht die bei Eingriff des Bremsschuhs mit dem Kontaktelement entstehende Kontaktfläche, wodurch eine höhere Kraftübertragung gewährleistet werden kann. Bevorzugt kann das Rastelement dabei als eine Verzahnung aus einem oder mehreren Zähnen ausgebildet sein. In einer besonders bevorzugten Ausgestaltung kann die Verzahnung flache Zahnflanken mit einem Winkel von vorzugsweise höchstens 45° aufweisen. Jedoch ist es ebenfalls möglich, das Rastelement als reine Reibfläche ohne Verzahnung oder als Mikroverzahnung auszugestalten.

Um den Verschleiß zu verringern und die Griffigkeit der Verzahnung zu erhöhen, kann das Rastelement in einer vorteilhaften Ausgestaltung aus Metall und/oder Kunststoff hergestellt werden.

Weiterhin kann die Bremsvorrichtung vorsehen, dass das Aktivierungselement ein Kniehebel oder ein Exzenter ist, insbesondere eine Exzenterscheibe oder eine Exzenterwelle, mit welcher das Übertragungselement verbunden sein kann. Damit kann zum Einen eine kompakte und flache Bauweise verwirklicht werden, so dass die Bremsvorrichtung insbesondere in Nabenantriebe, integrierbar ist. Zum Anderen kann durch die Verwendung einer Exzenterscheibe oder Exzenterwelle die Ansteuerung von mehreren Bremselementen realisiert werden. Weitere Bauformen des Aktivierungselementes sind denkbar. So kann es eine schräge Ebene, Gewinde oder jedwede andere Gestalt haben.

Auch ist eine direkte Ansteuerung des Aktivierungselementes über ein elektromechanisches, hydraulisches, pneumatisches oder anderweitiges Element möglich.

Konkret kann das Übertragungselement für eine besonders kompakte Bauform im Grenzfall infinitesimal kurz werden, so dass es nur die unmittelbare Verbindung zwischen Schwenklager und Aktivierungselement darstellt.

Besonders bevorzugt kann das Aktivierungselement manuell und/oder selbsttätig zwischen einer Rückstellposition und einer Aktivierungsposition bewegt werden. Somit kann zum Einen die Bremsung durch Betätigen eines Hebels in einer Notsituation ausgelöst werden. Zum Anderen kann die Bremsvorrichtung als Feststellbremse genutzt werden. Auch kann eine Notbremsung situationsabhängig durch voreinstellbare Parameter elektronisch durchgeführt werden, etwa beim Batterieausfall oder dem Erreichen eines kritischen Zustands des Motors.

Das entspricht der Wirkung nach einer Sicherheitsbremse, wie sie in Rollstuhlantrieben zum Einsatz kommt. Dabei wäre das Aktivierungselement federvorgespannt und könnte mittels eines Elektromagneten oder dergleichen geöffnet und offen gehalten werden. Im stromlosen Fall fällt die Bremse ein.

Des Weiteren kann nach Durchführung einer Notbremsung bzw. zum Lösen der Feststellbremse ein betätigbarer Hebel oder ein elektrisch ansteuerbares Stellelement, insbesondere ein Stellmotor, verwendet werden. Dieses Stellelement muss lediglich mit geringem Kraftaufwand das Aktivierungselement zurückstellen, so dass das Bremselement in eine Ausgangslage versetzt wird, welche den Bremsschuh außer Eingriff mit dem Kontaktelement bringt. Der zuvor um das Schwenklager ausgelenkte Bremsschuh kann dann mittels eines Rückstellelements zurückgestellt werden, so dass die Bremseinheit ihre Ausgangslage wieder einnimmt.

In einer weiteren vorteilhaften Ausgestaltung kann das Schwenklager mittels eines Federelements zurückgestellt werden. Durch das Federelement kann, nachdem das Aktivierungselement in seine Rückstellposition gebracht ist, der zuvor in Eingriff gestandene, über das Schwenklager gelenkig gelagerte Bremsschuh außer Kontakt mit dem Kontaktelement gebracht werden, wodurch ein automatisches Zurückstellen des Bremselements nach Lösen der Bremse gewährleistet ist.

Das Rückstellelement kann auch eine Kulisse sein, entlang derer sich beim Zurückfahren des Übertragungselementes der Bremsschuh wieder in seine Ausgangsposition bewegt.

Besonders bevorzugt kann das Übertragungselement zur Kraftübertragung in einer L-Form ausgebildet sein, wobei dieses darüber hinaus wenigstens einen zusätzlichen Haltepunkt, insbesondere einen Haltepunkt an einer Kulisse, aufweist. Somit können die auf das Bremselement wirkenden Kräfte besser verteilt bzw. auf weitere Bauteile der Bremseinheit übertragen und auch unerwartet größere, wirkende Kräfte von der Bremseinheit toleriert werden. Die L-Schenkel können dabei bevorzugt einen rechten Winkel, aber auch Winkel größer oder kleiner als 90° zwischen sich einschließen.

In einer abermalig vorteilhaften Ausgestaltung können mehrere Bremselemente in einer Bremseinheit verwendet werden. Um die größtmögliche Bremskraft zu entfalten, können mehrere Bremselemente zueinander gegenläufig angeordnet werden.

In einer besonders bevorzugten Ausführung können die Bremsschuhe dabei eine Verzahnung aufweisen, wobei die mehreren Bremselemente jeweils um ein ungeradzahliges Vielfaches einer halben Breite eines Zahnes der Verzahnung der Bremsschuhe zueinander versetzt angeordnet werden. Damit kann gewährleistet werden, dass immer ein Zahn eines Bremsschuhs der Bremseinheit sofort in Eingriff mit dem Kontaktelement gerät.

Damit bei einer Erschütterung oder bei Vibrationen nicht die Bremselemente unbeabsichtigt einen Bremsvorgang auslösen, kann in vorteilhafter Ausgestaltung die Bremseinheit in eine Kulisse aufgenommen werden. In die Bremseinheit einfahrende Schläge oder Vibrationen können somit an die Kulisse abgeleitet werden, wodurch ein Abheben oder ein versehentliches Auslösen der Bremsvorrichtung verhindert werden kann. Dies erlaubt zudem eine definierte Lagerung der Bremseinheit.

Weiterhin kann der Gegenstand der Erfindung als Feststell- oder Notbremse in einem motorisiert angetriebenen Rollstuhl, insbesondere in einem elektrischen Nabenantrieb eines Rollstuhls, angewendet werden.

Auch kann die Bremse in Kraftfahrzeugen als Wegrollsperre eingesetzt werden.

Automatische elektrische, elektrohydraulische Bremsen tendieren bei langer Standzeit des Kraftfahrzeuges an Steigungen zum Faden, also zum Nachlassen. Hier könnte eine beschriebene Bremse an den Antriebsachsen ein Wegrollen verhindern.

Die vorstehend beschriebene Erfindung wird im Folgenden anhand eines Ausführungsbeispiels näher erläutert.

Es zeigen
- Figur 1: die Bremseinheit angeordnet in einem Nabenmotor, in einer Querschnittsdarstellung,
- Figur 2a: einen Ausschnitt der Bremseinheit einer Bremsvorrichtung gemäß Figur 1 in geöffneter Position,
- Figur 2b: einen Ausschnitt einer Bremseinheit einer Bremsvorrichtung gemäß Figur 1 in geschlossener Position, sowie
- Figur 2c: die bei Eingriff der Bremseinheit gemäß Figur 2b wirkenden Kräfte.

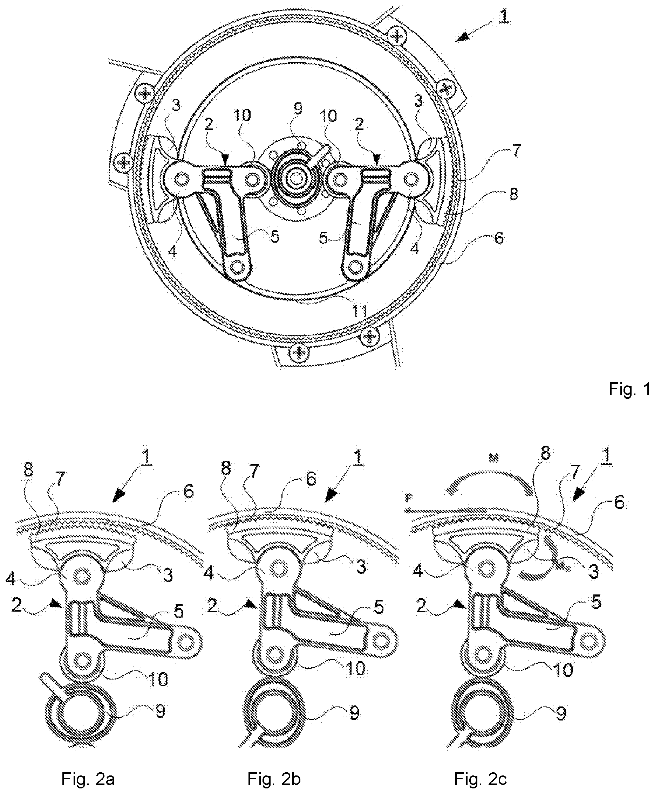

Figur 1 zeigt eine Bremseinheit 1, integriert in einen Nabenantrieb, welcher beispielsweise in elektromotorisierten Rollstühlen Anwendung findet. Dabei sind zwei einander gegenüberliegende Bremselemente 2 über kugelgelagerte Rollen 10 an einem mittig platzierten und exzentrisch ausgeformten Aktivierungselement 9 angeordnet. Beide Bremselemente 2 weisen einen an einem Schwenklager 4 gelenkig und über ein Übertragungselement 5 mit dem Aktivierungselement 9 wirkverbundenen Bremsschuh 3 mit einer äußeren Verzahnung 8 auf, wobei diese Anordnung von einem Kontaktelement mit einer inneren Verzahnung 7 umgeben ist. Die äußere Verzahnung 8 der Bremsschuhe 3 weist dabei einen größeren Winkel auf als eine innere Verzahnung 7 des Kontaktelements 6, so dass die Bremsschuhe 3 nach einer Kontaktierung des Kontaktelements 6 auf diesem in eine gestreckte Lage abrollen können. Weiterhin sind die Bremselemente 2 jeweils über das Übertragungselement 5 mit einer Kulisse 11 wirkverbunden. Dadurch werden einfahrende Schläge oder Vibrationen an die Kulisse 11 abgeleitet, womit ein Abheben oder ein versehentliches Auslösen der Bremseinheit 1 verhindert wird. Weiterhin sind die Bremsschuhe 3 der Bremselemente 2 zueinander um ein ungeradzahliges Vielfaches einer halben Breite eines Zahnes der äußeren Verzahnung 8 der Bremsschuhe 3 versetzt. Somit ist gewährleistet, dass immer ein Zahn der Verzahnung 8 am Bremsschuh 3 unverzüglich in Eingriff mit der inneren Verzahnung 7 des Kontaktelements 6 geraten kann.

Figur 2a zeigt einen Ausschnitt der Bremseinheit 1 gemäß Figur 1 in geöffnetem, bzw. gelüfteten Zustand. Diese umfasst ein Bremselement 2 und ein Aktivierungselement 9. Das Bremselement 2 weist einen Bremsschuh 3 mit einer äußeren Verzahnung 8 auf, wobei der Bremsschuh 3 verschwenkbar auf einem Schwenklager 4 gelenkig mit dem Übertragungselement 5 verbunden ist. Das Übertragungselement 5 ist mittels einer kugelgelagerten Rolle 10 mit dem Aktivierungselement 9 wirkverbunden. Das Kontaktelement 6 ist hierbei als Aktuator eines Nabenantriebs ausgebildet und verfügt komplementär zu dem Bremsschuh 3 über eine innere Verzahnung 7, wobei diese innere Verzahnung 7 zu der äußeren Verzahnung 8 des Bremsschuhs 3 komplementär ist. Das Aktivierungselement 9 ist als Exzenterelement ausgebildet. Beim Auslösen der Bremsvorrichtung 1 dreht sich das Aktivierungselement 9 um eine zentrale Drehachse, sodass aufgrund der ovalen Form des Aktivierungselements 9 das Bremselement 2 in Richtung des Kontaktelements 6 geschoben wird, bis der Bremsschuh 3 des Bremselements 2 mit seiner äußeren Verzahnung 8 in die innere Verzahnung 7 des Kontaktelements 6 eingreift.

Figur 2b zeigt den Ausschnitt der Bremseinheit 1 gemäß Figur 2a in einem geschlossenen Zustand, der Bereitschaftsposition. In der Bereitschaftsposition wirken in der Bremse noch keine Kräfte. Durch das Verschieben des Aktivierungselements 9 wurde über die am Aktivierungselement 9 anliegende kugelgelagerte Rolle 10 das Übertragungselement 5 und somit das am Übertragungselement 5 angeordnete Schwenklager 4, welches einen gelenkig gelagerten Bremsschuh 3 aufweist, derart ausgerückt, dass der Bremsschuh 3 des Bremselements 2 mit seiner äußeren Verzahnung 8 in die innere Verzahnung 7 des Kontaktelements 6 eingreift. Sobald ein Zahn der äußeren Verzahnung 8 des Bremsschuhs 3 in die innere Verzahnung 7 des Kontaktelements 6 eingreift und dabei eine Kraft F an dem Kontaktelement 6 anliegt, wird der Eingriff des ersten Zahns an den nächstliegenden Zahn der äußeren Verzahnung 8 des Bremsschuhs 3 weitergegeben und dieser Schritt mit dem jeweils benachbarten Zahn solange wiederholt, bis der Bremsschuh 3 über das Schwenklager 4 derart ausgelenkt ist, dass der letzte Zahn der äußeren Verzahnung 8 des Bremsschuhs 3 in die innere Verzahnung 7 des Kontaktelements 6 eingreift. In dieser Position, der Bremsposition, wirken die Bremskräfte.

Die beim Eingreifen des Bremsschuhs 3 des Bremselements 2 in das Kontaktelement 6 wirkenden Momente und Kräfte M, M_{R} und F sind in Figur 2c gezeigt. Durch das Drehmoment M des Kontaktelements 6 sowie die in Drehrichtung des Kontaktelements 6 wirkende Kraft F liegt am über das Schwenklager 4 gelenkig gelagerten Bremsschuh 3 ein Drehmoment M_{R} an. Da das Drehmoment M_{R} aus der Kraft F und damit aus dem Drehmoment M des Kontaktelements 6 herrührt, welche aus dem anliegenden Drehmoment auf das Kontaktelement resultiert, werden diese Momente und Kräfte bei Entstehung des Drehmoments M_{R} aufgebraucht bzw. übertragen, so dass das Kontaktelement 6 zum Stillstand kommt. Somit findet der Bremsvorgang durch die beschriebene Bremsvorrichtung während einer Bewegung, also wenn eine Kraft wirkt, beziehungsweise ein Drehmoment anliegt, statt.

Wird die zuvor beschriebene Bremsvorrichtung als Feststellbremse genutzt, greift durch die Verdrehung des Aktivierungselements 9 über das Übertragungselement 5 und dem Schwenklager 4 der Bremsschuh 3 des Bremselements 2 zwar in den Eingriff des Kontaktelements 6 in eine Aktivierungsposition ein, baut selbst aber keinen Druck gegen das Kontaktelement 6 auf. Dies geschieht erst infolge der Bewegung des Kontaktelements 6, gemäß Figur 2c, was eine Bremsposition oder Extremposition darstellt.

Vorstehend beschrieben ist somit eine Bremsvorrichtung die sowohl als eine Feststellbremse als auch als eine Notfallbremse funktioniert, dabei die eigentliche Bewegungskraft zur Bremsung ausnutzt und eine kompakte, leichte und günstige Bauweise aufweist, wobei dies durch einen über ein rückstellbares Schwenklager gelenkig verbundenen Bremsschuh verwirklicht ist.

### BEZUGSZEICHENLISTE

- 1: Bremseinheit
- 2: Bremselement
- 3: Bremsschuh
- 4: Schwenklager
- 5: Übertragungselement
- 6: Kontaktelement
- 7: innere Verzahnung
- 8: äußere Verzahnung
- 9: Aktivierungselement
- 10: kugelgelagerte Rolle
- 11: Kulisse

## Patentansprüche

1. Bremsvorrichtung umfassend eine Bremseinheit (1) und ein mit dieser in Eingriff bringbares, relativ zu der Bremseinheit (1) bewegliches Kontaktelement (6), wobei die Bremseinheit (1) wenigstens ein Aktivierungselement (9) und wenigstens ein Bremselement (2) umfasst und das Aktivierungselement (9) zum Verschieben des Bremselements (2) in Richtung des Kontaktelements (6) bis zu einer Kontaktierung desselben durch einen Bremsschuh (3) an einem Übertragungselement (5) angreift, wobei das Bremselement (2) ein Schwenklager mit dem Übertragungselement (5) aufweist, welches in Richtung des Kontaktelements (6) verschieblich ist,
**dadurch gekennzeichnet, dass** das Schwenklager (4) aufgrund einer auf den endständig an dem Schwenklager (4) angeordneten Bremsschuh (3), welcher einen Außenradius aufweist, welcher geringer ist als ein Innenradius des Kontaktelements (6), quer zur Richtung der Ausrückung wirkenden Querkraft des Kontaktelements (6) von einer Aktivierungsposition in eine Extremposition ausrückbar ist, sodass durch das Drehmoment (M) des Kontaktelements (6) sowie die in Drehrichtung des Kontaktelements (6) wirkende Kraft (F) am über das Schwenklager (4) gelenkig gelagerten Bremsschuh (3) ein Drehmoment (M_{R}) anliegt.

2. Bremsvorrichtung gemäß Anspruch 1, **dadurch gekennzeichnet, dass** einem Ausrückelement , über dem der Bremsschuh (3) mit dem Übertragungselement (5) verbunden ist, ein Rückstellelement zugeordnet ist, welches den Bremsschuh (3) bei einem Wegfall der Querkraft und/oder bei einer Rückstellung des Aktivierungselements aus der Extremposition in die Aktivierungsposition zurückstellt.

3. Bremsvorrichtung gemäß einem der vorhergehenden Ansprüche, **dadurch gekennzeichnet, dass** der Bremsschuh (3) und das Kontaktelement (6) jeweils ein zueinander komplementäres Rastelement aufweisen.

4. Bremsvorrichtung gemäß Anspruch 3, **dadurch gekennzeichnet, dass** das Rastelement eine Verzahnung (7, 8) mit einem oder mehreren Zähnen ist.

5. Bremsvorrichtung gemäß Anspruch 4, **dadurch gekennzeichnet, dass** die Zahnflanken flach ausgeführt sind, nämlich in einem Winkel von höchstens 45°.

6. Bremsvorrichtung gemäß Anspruch 3, **dadurch gekennzeichnet, dass** das Rastelement eine ebene Reibfläche oder eine Mikroverzahnung ist.

7. Bremsvorrichtung gemäß Anspruch 3 bis 6, **dadurch gekennzeichnet, dass** das Rastelement aus Metall und/oder Kunststoff hergestellt ist.

8. Bremsvorrichtung gemäß einem der vorhergehenden Ansprüche, **dadurch gekennzeichnet, dass** das Kontaktelement (6) ein Aktuator ist, insbesondere ein Aktuator eines Nabenantriebs.

9. Bremsvorrichtung gemäß einem der vorgehenden Ansprüche, **dadurch gekennzeichnet, dass** das Aktivierungselement (9) ein Kniehebel oder ein Exzenter, insbesondere eine Exzenterscheibe oder eine Exzenterwelle, eine schräge Ebene, ein Gewinde, oder ein direkt elektromechanisch, hydraulisch oder pneumatisch ansteuerbares Aktivierungselement ist.

10. Bremsvorrichtung gemäß einem der vorhergehenden Ansprüche, **dadurch gekennzeichnet, dass** das Aktivierungselement (9) manuell und/oder selbsttätig zwischen einer Rückstellposition und einer Aktivierungsposition bewegbar ist.

11. Bremsvorrichtung gemäß einem der vorhergehenden Ansprüche, **dadurch gekennzeichnet, dass** das Schwenklager (4) vermittels eines Federelements rückstellbar ist.

12. Bremsvorrichtung gemäß einem der vorhergehenden Ansprüche, **dadurch gekennzeichnet, dass** das Übertragungselement (5) eine L-Form und wenigstens einen Haltepunkt, insbesondere einen Haltepunkt an einer Kulisse (11), aufweist.

13. Bremsvorrichtung gemäß einem der vorhergehenden Ansprüche, **dadurch gekennzeichnet, dass** mehrere Bremselemente (2) zueinander gegenläufig angeordnet sind.

14. Bremsvorrichtung gemäß Anspruch 13, **dadurch gekennzeichnet, dass** die Bremsschuhe (3) eine Verzahnung (8) aufweisen und die mehreren Bremselemente (2) zueinander um ein ungeradzahliges Vielfaches einer halben Breite eines Zahnes der Verzahnung (8) der Bremsschuhe (3) versetzt sind.

15. Bremsvorrichtung gemäß einem der vorhergehenden Ansprüche, **dadurch gekennzeichnet, dass** die Bremseinheit (1) in eine Kulisse (11) eingebettet ist.

16. Verwendung einer Bremsvorrichtung gemäß einem der vorhergehenden Ansprüche als Feststell- und/oder als Notbremse in einem motorisiert angetriebenen Rollstuhl.

17. Verwendung einer Bremsvorrichtung gemäß einem der vorhergehenden Ansprüche als Feststell- und/oder Notbremse, vorzugsweise innerhalb einer Trommelbremse eines Kraftfahrzeugs.

## Claims

1. Brake device comprising a brake unit (1) and a contact element (6) that can be brought into engagement with the brake unit (1) and is movable relative to the brake unit (1), wherein the brake unit (1) comprises at least one activation element (9) and at least one brake element (2), and the activation element (9) engages a transmission element (5) on a transmission element (5) in order to move the brake element (2) in the direction of the contact element (6) until it makes contact with it by means of a brake shoe (3) on a transmission element (5), wherein the brake element (2) has a pivot bearing with the transmission element (5), which is movable in the direction of the contact element (6), **characterized in that** the pivot bearing (4) can be disengaged from an activation position into an extreme position by a transverse force of the contact element (6) acting transversely to the direction of disengagement due to a brake shoe (3) arranged at the end of the pivot bearing (4), which has an outer radius that is smaller than an inner radius of the contact element (6), so that the torque (M) of the contact element (6) and the force (F) acting in the direction of rotation of the contact element (6) on the brake shoe (3) mounted articulately via the pivot bearing (4), a torque (M_{R} ) is applied.

2. Brake device according to claim 1, **characterized in that** a return element is assigned to a release element via which the brake shoe (3) is connected to the transmission element (5), which returns the brake shoe (3) from the extreme position to the activation position when the transverse force is removed and/or when the activation element is reset.

3. Brake device according to one of the preceding claims, **characterized in that** the brake shoe (3) and the contact element (6) each have a locking element that is complementary to the other.

4. Brake device according to claim 3, **characterized in that** the locking element is a toothing (7, 8) with one or more teeth.

5. Brake device according to claim 4, **characterized in that** the tooth flanks are flat, namely at an angle of no more than 45°.

6. Brake device according to claim 3, **characterized in that** the locking element is a flat friction surface or micro-toothing.

7. Brake device according to claims 3 to 6, **characterized in that** the locking element is made of metal and/or plastic.

8. Brake device according to one of the preceding claims, **characterized in that** the contact element (6) is an actuator, in particular an actuator of a hub drive.

9. Brake device according to one of the preceding claims, **characterized in that** the activation element (9) is a toggle lever or an eccentric, in particular an eccentric disc or an eccentric shaft, an inclined plane, a thread, or an activation element that can be controlled directly by electromechanical, hydraulic, or pneumatic means.

10. Brake device according to one of the preceding claims, **characterized in that** the activation element (9) can be moved manually and/or automatically between a reset position and an activation position.

11. Brake device according to one of the preceding claims, **characterized in that** the pivot bearing (4) can be reset by means of a spring element.

12. Brake device according to one of the preceding claims, **characterized in that** the transmission element (5) has an L-shape and at least one holding point, in particular a holding point on a slide (11).

13. Brake device according to one of the preceding claims, **characterized in that** several brake elements (2) are arranged in opposite directions to each other.

14. Brake device according to claim 13, **characterized in that** the brake shoes (3) have teeth (8) and the plurality of brake elements (2) are offset relative to each other by an odd multiple of half the width of a tooth of the teeth (8) of the brake shoes (3).

15. Brake device according to one of the preceding claims, **characterized in that** the brake unit (1) is embedded in a guide (11).

16. Use of a brake device according to one of the preceding claims as a parking brake and/or emergency brake in a motorized wheelchair.

17. Use of a braking device according to one of the preceding claims as a parking and/or emergency brake, preferably within a drum brake of a motor vehicle.

## Revendications

1. Dispositif de freinage comprenant une unité de freinage (1) et un élément de contact (6) pouvant être mis en prise avec celle-ci et mobile par rapport à l'unité de freinage (1), l'unité de freinage (1) comprenant au moins un élément d'activation (9) et au moins un élément de freinage (2), et l'élément d'activation (9) s'engageant sur l'élément de transmission (5) pour déplacer l'élément de freinage (2) en direction de l'élément de contact (6) jusqu'à ce qu'il entre en contact avec celui-ci par l'intermédiaire d'un sabot de frein (3) sur un élément de transmission (5), l'élément de freinage (2) comportant un palier pivotant avec l'élément de transmission (5), qui est déplaçable en direction de l'élément de contact (6),
**caractérisé en ce que** le palier pivotant (4) peut être désengagé d'une position d'activation à une position extrême par une force transversale agissant sur le patin de frein (3) disposé à l'extrémité du palier pivotant (4), qui présente un rayon extérieur inférieur au rayon intérieur de l'élément de contact (6), permet de désengager le palier pivotant (4) d'une position d'activation vers une position extrême sous l'effet d'une force transversale de l'élément de contact (6) agissant transversalement à la direction de désengagement, de sorte que le couple (M) de l'élément de contact (6) et la force (F) agissant dans le sens de rotation de l'élément de contact (6) sur le sabot de frein (3) articulé sur le palier pivotant (4) exerce un couple (M_{R} ).

2. Dispositif de freinage selon la revendication 1, **caractérisé en ce qu'**un élément de rappel est associé à un élément de désengagement, par l'intermédiaire duquel le sabot de frein (3) est relié à l'élément de transmission (5), lequel élément de rappel ramène le sabot de frein (3) de la position extrême à la position d'activation en cas de disparition de la force transversale et/ou en cas de rappel de l'élément d'activation.

3. Dispositif de freinage selon l'une des revendications précédentes, **caractérisé en ce que** le sabot de frein (3) et l'élément de contact (6) comportent chacun un élément d'encliquetage complémentaire.

4. Dispositif de freinage selon la revendication 3, **caractérisé en ce que** l'élément d'encliquetage est une denture (7, 8) comportant une ou plusieurs dents.

5. Dispositif de freinage selon la revendication 4, **caractérisé en ce que** les flancs des dents sont plats, à savoir avec un angle maximal de 45°.

6. Dispositif de freinage selon la revendication 3, **caractérisé en ce que** l'élément d'encliquetage est une surface de friction plane ou une microdenture.

7. Dispositif de freinage selon les revendications 3 à 6, **caractérisé en ce que** l'élément d'encliquetage est fabriqué en métal et/ou en plastique.

8. Dispositif de freinage selon l'une des revendications précédentes, **caractérisé en ce que** l'élément de contact (6) est un actionneur, en particulier un actionneur d'un entraînement de moyeu.

9. Dispositif de freinage selon l'une des revendications précédentes, **caractérisé en ce que** l'élément d'activation (9) est un levier à genouillère ou un excentrique, en particulier un disque excentrique ou un arbre excentrique, un plan incliné, un filetage ou un élément d'activation pouvant être commandé directement de manière électromécanique, hydraulique ou pneumatique.

10. Dispositif de freinage selon l'une des revendications précédentes, **caractérisé en ce que** l'élément d'activation (9) peut être déplacé manuellement et/ou automatiquement entre une position de rappel et une position d'activation.

11. Dispositif de freinage selon l'une des revendications précédentes, **caractérisé en ce que** le palier pivotant (4) peut être ramené à sa position initiale au moyen d'un élément à ressort.

12. Dispositif de freinage selon l'une des revendications précédentes, **caractérisé en ce que** l'élément de transmission (5) présente une forme en L et au moins un point d'arrêt, en particulier un point d'arrêt sur une coulisse (11).

13. Dispositif de freinage selon l'une des revendications précédentes, **caractérisé en ce que** plusieurs éléments de freinage (2) sont disposés en sens inverse les uns par rapport aux autres.

14. Dispositif de freinage selon la revendication 13, **caractérisé en ce que** les sabots de frein (3) présentent une denture (8) et que les multiples éléments de freinage (2) sont décalés les uns par rapport aux autres d'un multiple impair de la moitié de la largeur d'une dent de la denture (8) des sabots de frein (3).

15. Dispositif de freinage selon l'une des revendications précédentes, **caractérisé en ce que** l'unité de freinage (1) est intégrée dans une coulisse (11).

16. Utilisation d'un dispositif de freinage selon l'une des revendications précédentes comme frein de stationnement et/ou frein de secours dans un fauteuil roulant à propulsion motorisée.

17. Utilisation d'un dispositif de freinage selon l'une des revendications précédentes comme frein de stationnement et/ou frein de secours, de préférence à l'intérieur d'un frein à tambour d'un véhicule automobile.
